# EUROPEAN PATENT APPLICATION

(11) **EP 4 538 884 A1**
(43) Date of publication of application: **16.04.2025**
(21) Application number: 24205689.3
(22) Date of filing: 09.10.2024
(51) Int. Cl.: G06F 9/50, G06F 8/71, G06F 9/445

(54) **INHERITANCE OPERATOR FOR MANAGING A PLURALITY OF SERVICE VERSIONS WITHIN A CLUSTER**

(30) Priority: 12.10.2023 US 202318379607
(71) Applicant: Red Hat, Inc., Raleigh, NC 27601 (US)
(72) Inventor: GRIFFIN, Leigh, Raleigh (US); FFRENCH, David, Raleigh (US)
(74) Representative: Murgitroyd & Company

(57) **Abstract**

Systems and methods for managing a set of service versions by utilizing a parent operator with a set of child operators that each provide functionality corresponding to the incremental capability of a corresponding service version are disclosed. A processing device determines a lowest service version among a plurality of different service versions and generates a parent operator based on the lowest service version. For each subsequent service version of the plurality of service versions: an incremental capability of the subsequent service version is determined and a corresponding child operator is generated based on the incremental capability. The corresponding child operator includes logic and code paths corresponding to the incremental capability. Upon receiving a request identifying a particular subsequent service version, a first child operator corresponding to the particular subsequent service version is identified. The first child operator is integrated into the parent operator to respond to the request.

## Description

### TECHNICAL FIELD

The present disclosure relates generally to software technology, and more particularly, to systems and methods for determining a lowest service version among a plurality of different service versions. Aspects of the disclosure relate to service provision using container orchestration engines, and more particularly, to managing a set of service versions by utilizing a parent operator with a set of child operators.

### BACKGROUND

A container orchestration engine (such as the Red Hat^{™} OpenShift^{™} module) may be a platform for developing and running containerized applications and may allow applications and the data centers that support them to expand from just a few machines and applications to thousands of machines that serve millions of clients. Container orchestration engines may provide an image-based deployment module for creating containers and may store one or more image files for creating container instances. Many application instances can be running in containers on a single host without visibility into each other's processes, files, network, and so on. Each container may provide a single function (often called a "micro-service") or component of an application, such as a web server or a database, though containers can be used for arbitrary workloads.

### SUMMARY

In accordance with a first implementation of the present disclosure, a method is provided of determining a lowest service version among a plurality of different service versions, comprising generating a parent operator based on the lowest service version; for each subsequent service version of the plurality of service versions, determining an incremental capability of the subsequent service version, and generating a corresponding child operator based on the incremental capability, wherein the corresponding child operator includes logic and code paths corresponding to the incremental capability, resulting in a set of child operators; receiving a request identifying a particular subsequent service version; identifying from the set of child operators, by a processing device, a first child operator corresponding to the particular subsequent service version; and integrating, by the parent operator, the first child operator into the parent operator to respond to the request.

As each child operator of the set of child operators is generated, the child operator may be registered with the parent operator to maintain a mapping of each subsequent service version to its corresponding child operator, and for each child operator of the set of child operators, an associated flag may be maintained indicating whether the parent operator is to integrate the child operator.

In response to the first child operator being identified, the flag associated with the first child operator may be modified to indicate that the first child operator is to be integrated into the parent operator, wherein integrating the first child operator into the parent operator comprises modifying logic and code paths of the parent operator with logic and code paths of the first child operator without recompiling the parent operator.

Determining the incremental capability of a particular subsequent service version may comprise determining the incremental capability based on a difference between a functionality of the particular subsequent service version and a functionality of the lowest service version.

Determining the incremental capability of a particular subsequent higher version may comprise determining the incremental capability based on a difference between a functionality of the particular subsequent higher version and a functionality of a previous subsequent higher service version.

Each child operator may include a pointer to one or more other child operators that the child operator depends on.

Integrating the first child operator into the parent operator may comprise determining, using a pointer of the first child operator, one or more other child operators of the set of child operators that the first child operator depends on, and integrating the logic and code paths of the first child operator and each of the one or more other child operators into the parent operator.

In accordance with a second implementation of the present disclosure, there is provided a system comprising a memory and a processing device operatively coupled to the memory, the processing device configured to determine a lowest service version among a plurality of different service versions; generate a parent operator based on the lowest service version; for each subsequent service version of the plurality of service versions, determine an incremental capability of the subsequent service version, and generate a corresponding child operator based on the incremental capability, wherein the corresponding child operator includes logic and code paths corresponding to the incremental capability, resulting in a set of child operators; receive a request identifying a particular subsequent service version; identify from the set of child operators, by a processing device, a first child operator corresponding to the particular subsequent service version; and integrate, by the parent operator, the first child operator into the parent operator to respond to the request.

The processing device may be further configured to, as each child operator of the set of child operators is generated, register the child operator with the parent operator to maintain a mapping of each subsequent service version to its corresponding child operator, and for each child operator of the set of child operators, maintain an associated flag indicating whether the parent operator is to integrate the child operator.

The processing device may be further configured to, in response to the first child operator being identified, modify the flag associated with the first child operator to indicate that the first child operator is to be integrated into the parent operator, wherein integrating the first child operator into the parent operator comprises modifying logic and code paths of the parent operator with logic and code paths of the first child operator without recompiling the parent operator.

The processing device may be further configured to determine the incremental capability of a particular subsequent service version by determining the incremental capability based on a difference between a functionality of the particular subsequent service version and a functionality of the lowest service version.

The processing device may be further configured to determine the incremental capability of a particular subsequent higher version by determining the incremental capability based on a difference between a functionality of the particular subsequent higher version and a functionality of a previous subsequent higher service version.

Each child operator may include a pointer to one or more other child operators that the child operator depends on.

The processing device may be further configured to integrate the first child operator into the parent operator by determining, using a pointer of the first child operator, one or more other child operators of the set of child operators that the first child operator depends on, and integrating the logic and code paths of the first child operator and each of the one or more other child operators into the parent operator.

A non-transitory computer-readable medium having instructions stored thereon which, when executed by a processing device, cause the processing device to determine a lowest service version among a plurality of different service versions; generate a parent operator based on the lowest service version; for each subsequent service version of the plurality of service versions, determine an incremental capability of the subsequent service version, and generate a corresponding child operator based on the incremental capability, wherein the corresponding child operator includes logic and code paths corresponding to the incremental capability, resulting in a set of child operators; receive a request identifying a particular subsequent service version; identify from the set of child operators, by a processing device, a first child operator corresponding to the particular subsequent service version; and integrate, by the parent operator, the first child operator into the parent operator to respond to the request.

The instructions may further cause the processing device to, as each child operator of the set of child operators is generated, register the child operator with the parent operator to maintain a mapping of each subsequent service version to its corresponding child operator, and for each child operator of the set of child operators, maintain an associated flag indicating whether the parent operator is to integrate the child operator.

The instructions may further cause the processing device to, in response to the first child operator being identified, modify the flag associated with the first child operator to indicate that the first child operator is to be integrated into the parent operator, wherein integrating the first child operator into the parent operator comprises modifying logic and code paths of the parent operator with logic and code paths of the first child operator without recompiling the parent operator.

The instructions may further cause the processing device to determine the incremental capability of a particular subsequent service version by determining the incremental capability based on a difference between a functionality of the particular subsequent service version and a functionality of the lowest service version.

The instructions may further cause the processing device to determine the incremental capability of a particular subsequent higher version by determining the incremental capability based on a difference between a functionality of the particular subsequent higher version and a functionality of a previous subsequent higher service version.

Each child operator may include a pointer to one or more other child operators that the child operator depends on.

The instructions may further cause the processing device to integrate the first child operator into the parent operator by determining, using a pointer of the first child operator, one or more other child operators of the set of child operators that the first child operator depends on, and integrating the logic and code paths of the first child operator and each of the one or more other child operators into the parent operator.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1 is a block diagram that illustrates an example system, in accordance with some embodiments of the present disclosure.
FIG. 2 is a detailed block diagram illustrating the example system of FIG. 1 with mappings of service versions and child operators, in accordance with some embodiments of the present disclosure.
FIG. 3 is a detailed block diagram illustrating the example system of FIG. 1 with identification of a child operator and integration of the child operator into a parent operator, in accordance with some embodiments of the present disclosure.
FIG. 4 is a detailed block diagram illustrating the example system of FIG. 1 with identification of a child operator and integration of the child operator into a parent operator, in accordance with some embodiments of the present disclosure.
FIG. 5 is a flow diagram of a method for managing a set of service versions by utilizing a parent operator with a set of child operators, in accordance with some embodiments of the present disclosure.
FIG. 6 is a block diagram of an example computing device that may perform one or more of the operations described herein, in accordance with some embodiments of the present disclosure.

### DETAILED DESCRIPTION

Container orchestration engines utilize controllers to implement control loops that look for events corresponding to changes either to the desired state of resources or the cluster itself by repeatedly comparing the desired state of the cluster to its actual state. If the cluster's actual state doesn't match the desired state, then the controller takes action to fix the problem. An operator is an application-specific controller that extends the functionality of the container orchestration engine API to create, configure, and manage instances of complex applications on behalf of a user. Operators build upon the basic resource and controller concepts, but include domain or application/service-specific knowledge to automate the entire life cycle of the application/service they manage.

An operator is a custom controller that uses custom resources (CR) to manage applications and their components. A custom resource is the API extension mechanism in a container orchestration engine. A custom resource definition (CRD) defines a CR and lists out all of the configurations available to users of the operator. High-level configurations and settings are provided by the user within a CR and the operator translates the high-level directives into low-level actions, based on best practices embedded within the operator's logic. The operator watches a CR type and takes application-specific actions to make the current state match the desired state in that resource.

Within a cloud environment such as OpenShift, managed services within a cluster sometimes have multiple versions of the same service available, often for compatibility purposes. However, each service version must have an associated operator resulting in a 1:1 mapping between service versions and operators. This creates a significant drain on resources as multiple operator instances are configured to manage the lifecycle of the service, each having a codebase footprint that is virtually identical. This makes implementing multi-service version techniques difficult in lightweight environments such as Edge, as well as cloud scenarios where costs must be controlled.

The present disclosure addresses the above-noted and other deficiencies by providing techniques for managing a set of service versions by utilizing a parent operator with a set of child operators that each provide functionality corresponding to the incremental capability of a corresponding service version. A processing device determines a lowest service version among a plurality of different service versions and generates a parent operator based on the lowest service version. For each subsequent service version of the plurality of service versions: an incremental capability of the subsequent service version is determined and a corresponding child operator is generated based on the incremental capability. The corresponding child operator includes logic and code paths corresponding to the incremental capability. Upon receiving a request identifying a particular subsequent service version, a first child operator corresponding to the particular subsequent service version is identified. The first child operator is integrated into the parent operator to respond to the request.

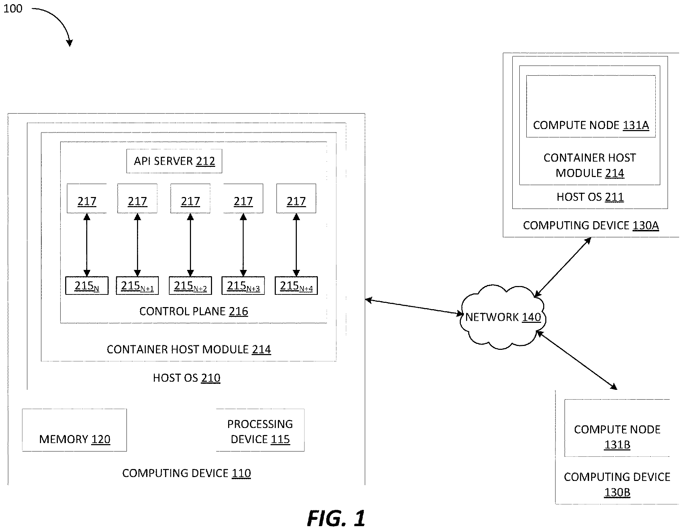

FIG. 1 is a block diagram that illustrates an example system 100. As illustrated in FIG. 1, the system 100 includes a computing device 110, and a plurality of computing devices 130. The computing devices 110 and 130 may be coupled to each other (e.g., may be operatively coupled, communicatively coupled, may communicate data/messages with each other) via network 140. Network 140 may be a public network (e.g., the internet), a private network (e.g., a local area network (LAN) or wide area network (WAN)), or a combination thereof. In one embodiment, network 140 may include a wired or a wireless infrastructure, which may be provided by one or more wireless communications systems, such as a WiFi^{™} hotspot connected with the network 140 and/or a wireless carrier system that can be implemented using various data processing equipment, communication towers (e.g. cell towers), etc. In some embodiments, the network 140 may be an L3 network. The network 140 may carry communications (e.g., data, message, packets, frames, etc.) between computing device 110 and computing devices 130. Each computing device may include hardware such as processing device 115 (e.g., processors, central processing units (CPUs), memory 120 (e.g., random access memory 120 (e.g., RAM), storage devices (e.g., hard-disk drive (HDD), solid-state drive (SSD), etc.), and other hardware devices (e.g., sound card, video card, etc.). In some embodiments, memory 120 may be a persistent storage that is capable of storing data. A persistent storage may be a local storage unit or a remote storage unit. Persistent storage may be a magnetic storage unit, optical storage unit, solid state storage unit, electronic storage units (main memory), or similar storage unit. Persistent storage may also be a monolithic/single device or a distributed set of devices. Memory 120 may be configured for long-term storage of data and may retain data between power on/off cycles of the computing device 110. Each computing device may comprise any suitable type of computing device or machine that has a programmable processor including, for example, server computers, desktop computers, laptop computers, tablet computers, smartphones, set-top boxes, etc. In some examples, each of the computing devices 110 and 130 may comprise a single machine or may include multiple interconnected machines (e.g., multiple servers configured in a cluster). The computing devices 110 and 130 may be implemented by a common entity/organization or may be implemented by different entities/organizations. For example, computing device 110 may be operated by a first company/corporation and one or more computing devices 130 may be operated by a second company/corporation. Each of computing device 110 and computing devices 130 may execute or include an operating system (OS) such as host OS 210 and host OS 211 of computing device 110 and 130 respectively, as discussed in more detail below. The host OS of a computing device 110 and 130 may manage the execution of other components (e.g., software, applications, etc.) and/or may manage access to the hardware (e.g., processors, memory, storage devices etc.) of the computing device. In some embodiments, computing device 110 may implement a control plane (e.g., as part of a container orchestration engine) while computing devices 130 may each implement a compute node (e.g., as part of the container orchestration engine).

In some embodiments, a container orchestration engine 214 (referred to herein as container host 214), such as the Red Hat^{™} OpenShift^{™} module, may execute on the host OS 210 of computing device 110 and the host OS 211 of computing device 130, as discussed in further detail herein. The container host module 214 may be a platform for developing and running containerized applications and may allow applications and the data centers that support them to expand from just a few machines and applications to thousands of machines that serve millions of clients. Container host 214 may provide an image-based deployment module for creating containers and may store one or more image files for creating container instances. Many application instances can be running in containers on a single host without visibility into each other's processes, files, network, and so on. In some embodiments, each container may provide a single function (often called a "micro-service") or component of an application, such as a web server or a database, though containers can be used for arbitrary workloads. In this way, the container host 214 provides a function-based architecture of smaller, decoupled units that work together.

Container host 214 may include a storage driver (not shown), such as OverlayFS, to manage the contents of an image file including the read only and writable layers of the image file. The storage driver may be a type of union file system which allows a developer to overlay one file system on top of another. Changes may be recorded in the upper file system, while the lower file system (base image) remains unmodified. In this way, multiple containers may share a file-system image where the base image is read-only media.

An image file may be stored by the container host 214 or a registry server. In some embodiments, the image file may include one or more base layers. An image file may be shared by multiple containers. When the container host 214 creates a new container, it may add a new writable (e.g., in-memory) layer on top of the underlying base layers. However, the underlying image file remains unchanged. Base layers may define the runtime environment as well as the packages and utilities necessary for a containerized application to run. Thus, the base layers of an image file may each comprise static snapshots of the container's configuration and may be read-only layers that are never modified. Any changes (e.g., data to be written by the application running on the container) may be implemented in subsequent (upper) layers such as in-memory layer. Changes made in the in-memory layer may be saved by creating a new layered image.

While the container image is the basic unit containers may be deployed from, the basic units that the container host 214 may work with are called pods. A pod may refer to one or more containers deployed together on a single host, and the smallest compute unit that can be defined, deployed, and managed. Each pod is allocated its own internal IP address, and therefore may own its entire port space. A user (e.g., via the container host module 214) may define the entrypoint script of a pod to instruct the pod to configure itself as a unique simulated compute node with its own IP addresses and simulated network stacks and communicate with the internal API of the control plane. Containers within pods may share their local storage and networking. In some embodiments, pods have a lifecycle in which they are defined, they are assigned to run on a node, and they run until their container(s) exit or they are removed based on their policy and exit code. Although a pod may contain one or more than one container, the pod is the single unit that a user may deploy, scale, and manage. The control plane 216 of the container host 214 may include ControllersA-D, one or more of which may be e.g., a replication controller that indicates how many pod replicas are required to run at a time and may be used to automatically scale an application to adapt to its current demand.

By their nature, containerized applications are separated from the operating systems where they run and, by extension, their users. The control plane 216 may expose applications to internal and external networks by defining network policies that control communication with containerized applications (e.g., incoming HTTP or HTTPS requests for services inside the cluster 131).

A typical deployment of the container host 214 may include a control plane 216 and a cluster of worker nodes 131, including worker nodes 131A and 131B (also referred to as compute machines). The worker nodes 131 may run the aspects of the container host 214 that are needed to launch and manage containers, pods, and other objects. For example, a worker node may be a physical server that provides the processing capabilities required for running containers in the environment. A worker node may also be implemented as a virtual server, logical container, or GPU, for example.

The control plane 216 may include APIs (not shown) (e.g., REST APIs) which expose objects, as well as controllers (not shown) which read those APIs, apply changes to objects, and report status or write back to objects. Objects may be persistent entities in the container host 214, which are used to represent the state of the cluster 131 (e.g., deployments, replicasets, and pods). The control plane 216 may run an API server 212 (e.g., Kubernetes API server 212) that validates and configures the data for objects such as e.g., pods, services, and controllers as well as provides a focal point for the cluster 131's shared state. A resource may refer to an endpoint that stores a collection of API objects of a certain type (e.g., deployment, service, namespace, etc.).

In a multilevel hierarchy, there may be many scenarios where there are resources that control other resources. For example, a deployment may control a replicaset, which in turn may control a pod. A deployment is an object that provides declarative updates for pods and replicasets. A desired state may be described in a deployment, and a deployment controller may change the actual state to the desired state at a controlled rate. For example, deployments may be defined to create new replicasets, or to remove existing deployments and adopt all their resources with new deployments.

Controllers may observe the state of the cluster 131 via the API server 212 and look for events corresponding to changes either to the desired state of resources (e.g., create, update, delete) or the cluster (e.g., pod or node dies). Controllers may then make changes to the cluster 131 to ensure that the current state matches the desired state described by the observed resource (referred to as reconciling). Each controller observes and reconciles certain object types as defined by the controller's filter metadata. The Controllers actuate objects after they are written by observing object types, and then triggering reconciles from events. After an object is created/updated/deleted, controllers observing that object type will receive a notification that the object has been changed, and they may read the state of the cluster 131 to see what has changed (instead of relying on the event for this information). For example, when a user wishes to scale up a deployment, a request may be sent to the API server 212 with the new desired configuration. The API server 212 in return publishes the change which is read by the deployment controller observing the deployment. Thus, the deployment controller 21 creates one or more pods to conform to the new definition. A new pod creation is, in itself, a new change that the API server 212 also broadcasts to all event listeners. So, if there are any actions that should get triggered upon creation of a new pod, they may be registered automatically.

Operators apply the model described above with respect to controllers at the level of a service and are often thought of as a service-specific controller. An operator may act as a custom controller that uses custom resources (CRs) to manage a service and its components. A user may use a CR to provide high-level configuration and settings for a service, while the operator translates the high-level configuration directives into low level actions, based on best practices embedded within the operator's logic. The operator watches the CR and takes service-specific actions to make the current state of the service match the desired state. A CR is a mechanism for extending the API of the container orchestration engine, and can be defined using a custom resource definition (CRD). A CRD defines a CR and lists out all of the configurations available to users of the operator. A CRD defines a new, unique object type in the cluster and allows the API server 212 to handle its entire lifecycle. When a cluster administrator adds a new CRD to the cluster, the API server 212 reacts by creating a new resource path that can be accessed by the entire cluster or a single project (namespace) and begins serving any specified CRs. CRs are the primary interface for a user, consistent with a resource-based interaction model. It should be noted that although described with respect to CRs and services, operators can utilize any appropriate mechanism for extending the API of the container orchestration engine and can function to manage other resources as well.

Continuing to refer to FIG. 1, the control plane 216 may host a plurality of different versions of a service 215_{N} - 215_{N+4} (also referred to herein as service versions 215_{N} - 215_{N+4}). Each service version 215 is managed by a corresponding operator 217. As discussed hereinabove, having a separate operator manage each service version 215_{N} - 215_{N+4} results in a significant drain on resources, despite each operator having a codebase footprint that is virtually identical. This makes implementing multi-service version techniques difficult in lightweight environments such as Edge, as well as cloud scenarios where costs must be controlled.

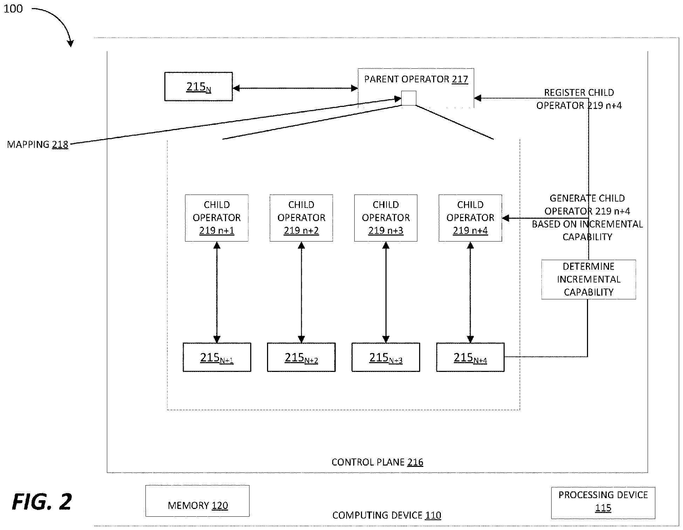

Referring now to FIG. 2, the control plane 216 may analyze the plurality of service versions 215_{N} - 215_{N+4} to determine the lowest service version available using any appropriate method. In the example of FIG. 2, the control plane 216 may determine that service version 215_{N} is the lowest service version available. The control plane 216 may then create a parent operator that has all the logic and code paths needed to implement the lowest service version 215_{N}.

For each subsequent service version (i.e., service versions 215_{N+1} - 215_{N+4}) hosted by the control plane 216, the control plane 216 may determine the incremental capability of the subsequent service version. More specifically, the control plane 216 may determine the incremental capability for each subsequent service version 215_{N+1} - 215_{N+4} as the difference between the functionality of that subsequent service version (e.g., 215_{N+4}) and the functionality of the lowest service version 215_{N} (e.g., Δ (215_{N+}4 - 215_{N})). For each subsequent service version 215_{N+1} - 215_{N+}4, the control plane 216 may then generate a corresponding child operator 219 (e.g., child operator 219n+4) based on the determined incremental capability for that subsequent service version 215. The logic and code paths of such a child operator 219 may provide functionality corresponding to the incremental capability of the corresponding subsequent service version 215 and not the full capability of the corresponding subsequent service version 215. As a result, the code footprint of a child operator 219 is significantly lower than that of an operator generated based on an entire version of the subsequent service version 215.

In some embodiments, for each subsequent service version 215 _{N+1} - 215_{N+}4, the incremental capability may be determined as the difference between the functionality of that subsequent service version (e.g., 215_{N+2}) and the functionality of the previous subsequent service version (e.g., 215_{N+1}) e.g., Δ (215_{N+2} - 215_{N+1}). In such embodiments, the child operator 219 corresponding to each subsequent service version 215 is still generated based on the incremental capability of that subsequent service version 215.

The incremental capability of a subsequent service version 215 may correspond to any appropriate functionality. For example, a subsequent service version 215 (e.g., 215_{N+3}) may create a new field and/or a new child resource in the specification of the CR corresponding to the service that previous service versions do not. Thus, there must be logic in the reconciliation process to create this new field and/or child resource and a child operator corresponding to the subsequent service version 215_{N+3} may include logic and code paths to do so. If the incremental capability of a subsequent service version 215 requires changes to the CRD, then the corresponding child operator 219 for that subsequent service version 215 may be generated with a new CRD specifying those changes.

Although FIG. 2 illustrates the subsequent service versions 215_{N+1} - 215_{N+4} as ascending incrementally by version number, this need not be the case and the subsequent service versions may correspond to any service versions higher than the lowest. For example, instead of subsequent service versions 215_{N+1} - 215_{N+4}, the control plane 216 may host subsequent service versions 215_{N+1}, 215_{N+3}, 215_{N+4}, 215_{N+7}, and 215_{N+10}. It should be noted that the child operators generated for subsequent service versions may still be referred to as child operator n+1, child operator n+2, child operator n+3 etc. respectively.

As a child operator 219 is generated for each subsequent service version 215_{N+1} - 215_{N+4}, that child operator 219 is registered with the parent operator 217 so that the parent operator 217 can maintain a mapping 218 of subsequent service versions 215_{N+1} - 215_{N+4} to child operators 219 n+1 - n+4.

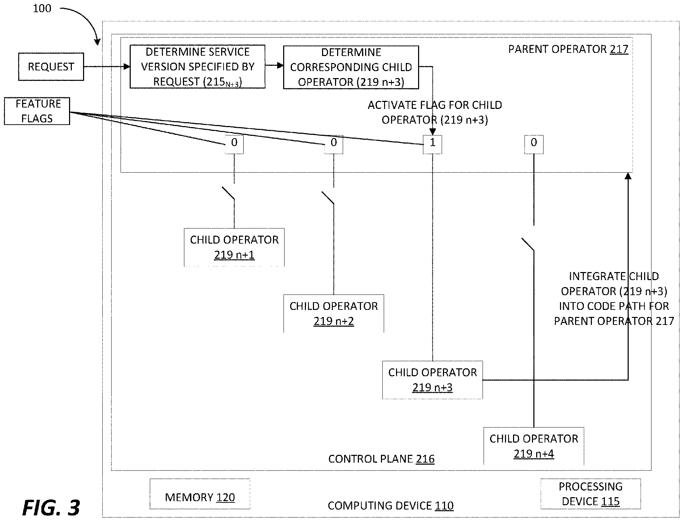

As shown in FIG. 3, when a request to access a particular service version 215 is received by the API server 212 (not shown in FIG. 3), the parent operator 217 may intercept the request and identify the subsequent service version 215 that is to be invoked. For example, the request payload may indicate the subsequent service version 215 to be invoked, and the parent operator 217 may identify the subsequent service version 215 to be invoked from the request payload. Upon identifying the subsequent service version 215 to be invoked, the parent operator 217 may use the mapping 218 to identify the child operator 219 corresponding to the subsequent service version 215 to be invoked. The parent operator 217 may include logic that can integrate the logic and code paths of the identified child operator 219. Upon identifying the child operator 219 corresponding to the subsequent service version 215 to be invoked, the parent operator 217 may integrate the logic and code paths of the identified child operator 219 to provide the service version 215 specified in the request. It should be noted that although the mapping 218 is illustrated as being implemented within the parent operator 217 in FIG. 2, this is not a limitation and the mapping 218 may also be implemented in the control plane 216. In embodiments where the mapping 218 is implemented in the control plane 216, some or all of the child operator 219 identification and integration functionality may be implemented by the control plane 216 as well.

The parent operator 217 may manage the child operators 219 and integrate the logic and code paths of a child operator 219 corresponding to a subsequent service version 215_{N+1} - 215_{N+4} specified in a request in any appropriate manner. FIG. 3 illustrates one example method by which the parent operator 217 may manage child operators 219 and integrate the logic and code paths of a child operator 219 corresponding to a requested service version 215.

As shown in FIG. 3, the parent operator 217 may implement a feature flag-type scheme where the logic and code paths of each child operator 219 is associated with a feature flag within the parent operator 217 that the parent operator 217 can turn on and off. When the parent operator 217 turns a feature flag for a particular child operator 219 on (e.g., by setting the feature flag to 1), it may assume the logic and code paths of that particular child operator 219. Stated differently, the logic and code paths of the particular child operator 219 become part of the parent operator 217's execution capability. In the example of FIG. 3, the parent operator 217 intercepts a request specifying service version 215_{N+3}. The parent operator 217 may determine that the service version 215_{N+3} has been specified in the request as discussed in further detail hereinabove. The parent operator 217 then looks up the child operator corresponding to the service version 215N+3 using the mapping 218 (illustrated in FIG. 2), determines that child operator 219n+3 corresponds to the service version 215_{N+3}, and activates the feature flag corresponding to the child operator 219n+3.

When the parent operator 217 integrates the logic and code paths of a child operator 219, it may do so by utilizing any appropriate method for dynamically altering the logic and code paths of the parent operator 217 with the logic and code paths of the child operator 219. In some example embodiments, the parent operator 217 may implement the child operator 219 as a logical extension of itself by e.g., using a Java style import function to import the child operator 219, or using a Java style hot reload function on the child operator 219. Because the parent operator 217 is dynamically altered with the logic and code paths of the child operator 219, the control plane 216 does not need to recompile the parent operator 217. In the example of FIG. 3, the parent operator 217 may then answer the request using the functionality of the child operator 219 n+3 in conjunction with its own functionality.

In embodiments where the incremental capability that each child operator 219 is based on is determined as the difference between the functionality of the corresponding subsequent service version (e.g., 215_{N+2}) and the functionality of the previous subsequent service version (e.g., 215_{N+1}), the requested version of the service may depend on multiple previous subsequent service versions 215 that are available on the control plane 216. For example, the requested subsequent service version 215_{N+4} may depend on subsequent service version 215_{N+2}, which in turn depends on subsequent service version 215_{N+1}. Thus, the parent operator 217 cannot just integrate the logic and code paths of the child operator n+4 corresponding to the requested subsequent service version 215_{N+4}. Instead, the parent operator 217 must also integrate the logic and code paths of the child operators 219n+2 and 219n+1 corresponding to the subsequent service version 215_{N+2} and subsequent service version 215_{N+}1. Stated differently, the parent operator 217 must integrate the logic and code paths of each child operator 219 corresponding to a version of the service in the dependency chain (215_{N+2} and 215_{N+1} in the current example) of subsequent service version 215_{N+4}.

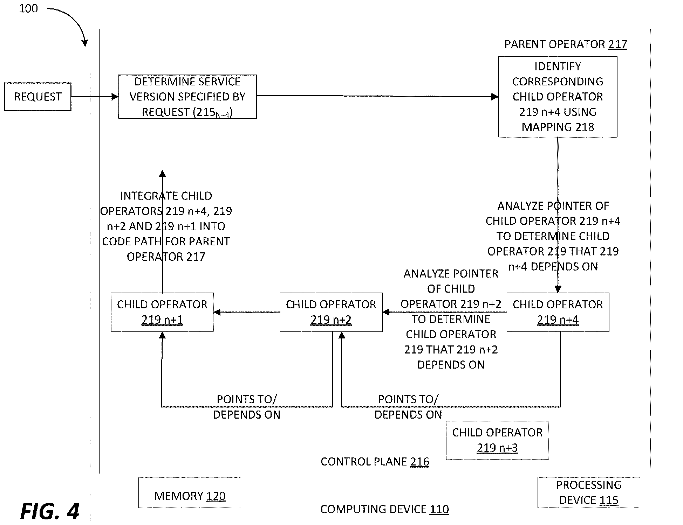

In such embodiments, each child operator 219 may point to one or more other child operator(s) 219 that it depends on. This is shown in the example of FIG. 4, where (continuing the example above) child operator 219 n+4 depends on child operator 219 n+2, which in turn depends on child operator 219 n+1. When the parent operator 217 intercepts a request and identifies child operator n+4 as corresponding to the service version 215_{N+4} specified in the request, it may use the pointer in the child operator n+4 to determine the child operator(s) that child operator n+4 depends on (e.g., child operator n+2 in the example of FIG. 4). The parent operator may use the pointer in the child operator n+2 to determine the child operator(s) that child operator n+2 depends on (e.g., child operator n+1 in the example of FIG. 4). Thus, the parent operator 217 may integrate the logic and code paths of child operators n+1, n+2 and n+4 (using any appropriate method as discussed herein) to service the request for service version 215_{N+4}.

By utilizing child operators 219 that provide functionality corresponding to the incremental capability of the corresponding subsequent service version 215, the code footprint of operators that the control plane 216 must maintain is significantly lower compared to maintaining operators that each provide functionality corresponding to the full capability of a corresponding subsequent service version 215. This is because typically, the logic changes between versions of a service are, at an operator level, minimal.

In some embodiments, each child operator 219 may be stored as part of its corresponding subsequent service version 215. In this way, the incremental capability of each child operator 219 may be tied to the code of the corresponding subsequent service version 215. In turn, the child operator 219 may become more portable, and can be migrated to another cluster without needing to derive the N to N+1 version, thereby reducing the footprint and computational complexity required to export/import the child operator.

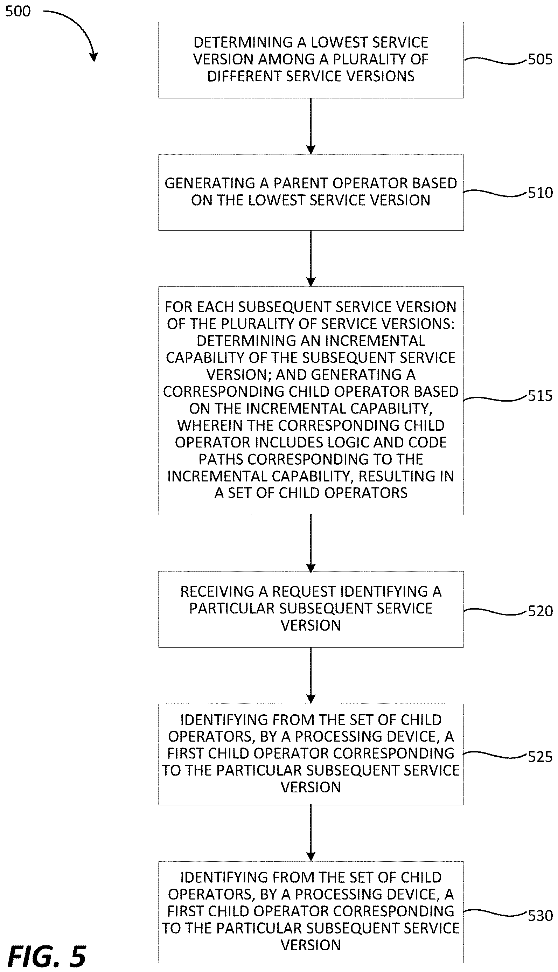

FIG. 5 is a flow diagram of a method 500 for managing a set of service versions by utilizing a parent operator with a set of child operators that each provide functionality corresponding to the incremental capability of a corresponding service version, in accordance with some embodiments of the present disclosure. Method 500 may be performed by processing logic that may comprise hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, the method 500 may be performed by a computing device (e.g., computing device 110 illustrated in FIGS. 2-4).

Referring also to FIGS. 2-4, at block 505, the control plane 216 may analyze the plurality of service versions 215_{N} - 215_{N+4} to determine the lowest service version available using any appropriate method. In the example of FIG. 2, the control plane 216 may determine that service version 215_{N} is the lowest service version available. The control plane 216 may then at block 510, create a parent operator that has all the logic and code paths needed to implement the lowest service version 215_{N}.

At block 515, for each subsequent service version (i.e., service versions 215_{N+1} - 215_{N+4}) hosted by the control plane 216, the control plane 216 may determine the incremental capability of the subsequent service version. More specifically, the control plane 216 may determine the incremental capability for each subsequent service version 215_{N+1} - 215_{N+4} as the difference between the functionality of that subsequent service version (e.g., 215_{N+4}) and the functionality of the lowest service version 215_{N} (e.g., Δ (215_{N+}4 - 215_{N})). For each subsequent service version 215_{N+1} - 215_{N+}4, the control plane 216 may then generate a corresponding child operator 219 (e.g., child operator 219n+4) based on the determined incremental capability for that subsequent service version 215. The logic and code paths of such a child operator 219 may provide functionality corresponding to the incremental capability of the corresponding subsequent service version 215 and not the full capability of the corresponding subsequent service version 215. As a result, the code footprint of a child operator 219 is significantly lower than that of an operator generated based on an entire version of the subsequent service version 215.

In some embodiments, for each subsequent service version 215 _{N+1} - 215_{N+}4, the incremental capability may be determined as the difference between the functionality of that subsequent service version (e.g., 215_{N+2}) and the functionality of the previous subsequent service version (e.g., 215_{N+1}) e.g., Δ (215_{N+2} - 215_{N+1}). In such embodiments, the child operator 219 corresponding to each subsequent service version 215 is still generated based on the incremental capability of that subsequent service version 215.

The incremental capability of a subsequent service version 215 may correspond to any appropriate functionality. For example, a subsequent service version 215 (e.g., 215_{N+3}) may create a new field and/or a new child resource in the specification of the CR corresponding to the service that previous service versions do not. Thus, there must be logic in the reconciliation process to create this new field and/or child resource and a child operator corresponding to the subsequent service version 215_{N+3} may include logic and code paths to do so. If the incremental capability of a subsequent service version 215 requires changes to the CRD, then the corresponding child operator 219 for that subsequent service version 215 may be generated with a new CRD specifying those changes.

As a child operator 219 is generated for each subsequent service version 215_{N+1} - 215_{N+}4, that child operator 219 is registered with the parent operator 217 so that the parent operator 217 can maintain a mapping 218 of subsequent service versions 215_{N+1} - 215_{N+4} to child operators 219 n+1 - n+4.

As shown in FIG. 3, at block 520 a request to access a particular service version 215 is received by the API server 212 (not shown in FIG. 3), and the parent operator 217 may intercept the request and identify the subsequent service version 215 that is to be invoked. For example, the request payload may indicate the subsequent service version 215 to be invoked, and the parent operator 217 may identify the subsequent service version 215 to be invoked from the request payload. Upon identifying the subsequent service version 215 to be invoked, at block 525 the parent operator 217 may use the mapping 218 to identify the child operator 219 corresponding to the subsequent service version 215 to be invoked. The parent operator 217 may include logic that can integrate the logic and code paths of the identified child operator 219. At block 530, upon identifying the child operator 219 corresponding to the subsequent service version 215 to be invoked, the parent operator 217 may integrate the logic and code paths of the identified child operator 219 to provide the service version 215 specified in the request. It should be noted that although the mapping 218 is illustrated as being implemented within the parent operator 217 in FIG. 2, this is not a limitation and the mapping 218 may also be implemented in the control plane 216. In embodiments where the mapping 218 is implemented in the control plane 216, some or all of the child operator 219 identification and integration functionality may be implemented by the control plane 216 as well.

The parent operator 217 may manage the child operators 219 and integrate the logic and code paths of a child operator 219 corresponding to a subsequent service version 215_{N+1} - 215_{N+4} specified in a request in any appropriate manner. FIG. 3 illustrates one example method by which the parent operator 217 may manage child operators 219 and integrate the logic and code paths of a child operator 219 corresponding to a requested service version 215.

As shown in FIG. 3, the parent operator 217 may implement a feature flag-type scheme where the logic and code paths of each child operator 219 is associated with a feature flag within the parent operator 217 that the parent operator 217 can turn on and off. When the parent operator 217 turns a feature flag for a particular child operator 219 on (e.g., by setting the feature flag to 1), it may assume the logic and code paths of that particular child operator 219. Stated differently, the logic and code paths of the particular child operator 219 become part of the parent operator 217's execution capability. In the example of FIG. 3, the parent operator 217 intercepts a request specifying service version 215_{N+3}. The parent operator 217 may determine that the service version 215_{N+3} has been specified in the request as discussed in further detail hereinabove. The parent operator 217 then looks up the child operator corresponding to the service version 215N+3 using the mapping 218 (illustrated in FIG. 2), determines that child operator 219n+3 corresponds to the service version 215_{N+3}, and activates the feature flag corresponding to the child operator 219n+3.

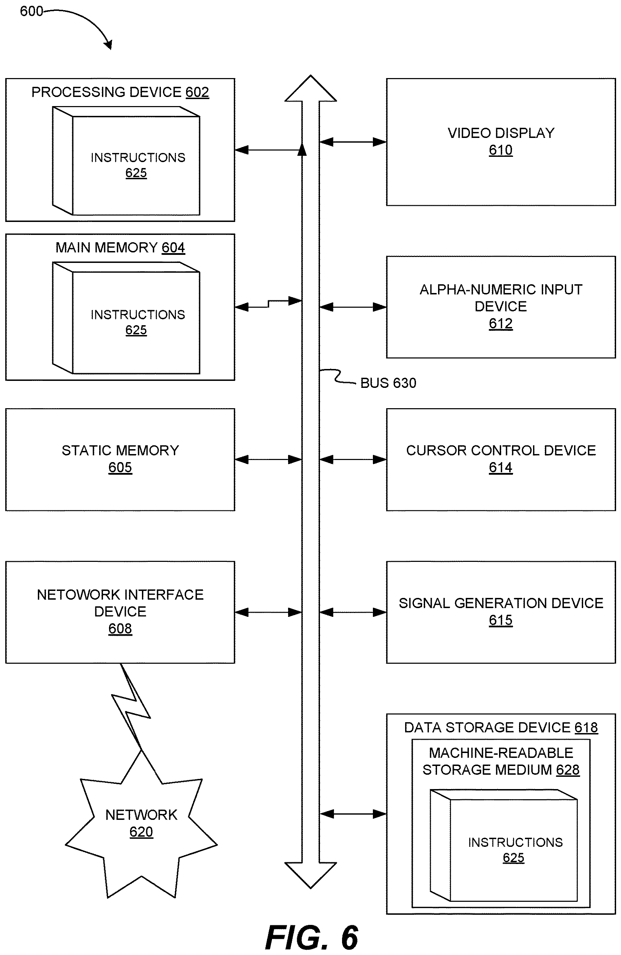

FIG. 6 illustrates a diagrammatic representation of a machine in the example form of a computer system 600 within which a set of instructions, for causing the machine to perform any one or more of the methodologies discussed herein for managing a set of service versions by utilizing a parent operator with a set of child operators that each provide functionality corresponding to the incremental capability of a corresponding service version, in accordance with some embodiments of the present disclosure.

In alternative embodiments, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In one embodiment, computer system 600 may be representative of a server.

The exemplary computer system 600 includes a processing device 602, a main memory 604 (e.g., read-only memory (ROM), flash memory, dynamic random access memory (DRAM), a static memory 606 (e.g., flash memory, static random access memory (SRAM), etc.), and a data storage device 618, which communicate with each other via a bus 630. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

Computing device 600 may further include a network interface device 608 which may communicate with a network 620. The computing device 600 also may include a video display unit 610 (*e.g.,* a liquid crystal display (LCD) or a cathode ray tube (CRT)), an alphanumeric input device 612 (*e.g.,* a keyboard), a cursor control device 614 (*e.g.,* a mouse) and an acoustic signal generation device 616 (*e.g.,* a speaker). In one embodiment, video display unit 610, alphanumeric input device 612, and cursor control device 614 may be combined into a single component or device (*e.g.,* an LCD touch screen).

Processing device 602 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. Processing device 602 may also be one or more special-purpose processing devices such as an application specific integrated circuit (ASIC), a field programmable gate array (FPGA), a digital signal processor (DSP), network processor, or the like. The processing device 602 is configured to execute instructions 625, for performing the operations and steps discussed herein.

The data storage device 618 may include a machine-readable storage medium 628, on which is stored one or more sets of instructions 625 (e.g., software) embodying any one or more of the methodologies of functions described herein. The instructions 625 may also reside, completely or at least partially, within the main memory 604 or within the processing device 602 during execution thereof by the computer system 600; the main memory 604 and the processing device 602 also constituting machine-readable storage media. The instructions 625 may further be transmitted or received over a network 620 via the network interface device 608.

The machine-readable storage medium 628 may also be used to store instructions to perform a method for determining if a controller that can service a CRD exists, as described herein. While the machine-readable storage medium 628 is shown in an exemplary embodiment to be a single medium, the term "machine-readable storage medium" should be taken to include a single medium or multiple media (e.g., a centralized or distributed database, or associated caches and servers) that store the one or more sets of instructions. A machine-readable medium includes any mechanism for storing information in a form (e.g., software, processing application) readable by a machine (e.g., a computer). The machine-readable medium may include, but is not limited to, magnetic storage medium (e.g., floppy diskette); optical storage medium (e.g., CD-ROM); magneto-optical storage medium; read-only memory (ROM); random-access memory (RAM); erasable programmable memory (e.g., EPROM and EEPROM); flash memory; or another type of medium suitable for storing electronic instructions.

Unless specifically stated otherwise, terms such as "determining," "generating," "receiving," "identifying," "integrating" or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may comprise a general purpose computing device selectively programmed by a computer program stored in the computing device. Such a computer program may be stored in a computer-readable non-transitory storage medium.

The methods and illustrative examples described herein are not inherently related to any particular computer or other apparatus. Various general purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. 112, sixth paragraph, for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the invention is not to be limited to the details given herein, but may be modified within the scope and equivalents of the appended claims.

## Claims

1. A method comprising:
determining a lowest service version among a plurality of different service versions;
generating a parent operator based on the lowest service version;
for each subsequent service version of the plurality of service versions:
determining an incremental capability of the subsequent service version, and
generating a corresponding child operator based on the incremental capability, wherein the corresponding child operator includes logic and code paths corresponding to the incremental capability, resulting in a set of child operators;
receiving a request identifying a particular subsequent service version;
identifying from the set of child operators, by a processing device, a first child operator corresponding to the particular subsequent service version; and
integrating, by the parent operator, the first child operator into the parent operator to respond to the request.

2. The method of claim 1, further comprising:
as each child operator of the set of child operators is generated, registering the child operator with the parent operator to maintain a mapping of each subsequent service version to its corresponding child operator; and
for each child operator of the set of child operators, maintaining an associated flag indicating whether the parent operator is to integrate the child operator.

3. The method of claim 2, further comprising:
in response to the first child operator being identified, modifying the flag associated with the first child operator to indicate that the first child operator is to be integrated into the parent operator, wherein integrating the first child operator into the parent operator comprises:
modifying logic and code paths of the parent operator with logic and code paths of the first child operator without recompiling the parent operator.

4. The method of claim 1, wherein determining the incremental capability of a particular subsequent service version comprises:
determining the incremental capability based on a difference between a functionality of the particular subsequent service version and a functionality of the lowest service version.

5. The method of claim 1, wherein determining the incremental capability of a particular subsequent higher version comprises:
determining the incremental capability based on a difference between a functionality of the particular subsequent higher version and a functionality of a previous subsequent higher service version.

6. The method of claim 5, wherein each child operator includes a pointer to one or more other child operators that the child operator depends on.

7. The method of claim 6, wherein integrating the first child operator into the parent operator comprises:
determining, using a pointer of the first child operator, one or more other child operators of the set of child operators that the first child operator depends on; and
integrating the logic and code paths of the first child operator and each of the one or more other child operators into the parent operator.

8. A system comprising:
a memory; and
a processing device operatively coupled to the memory, the processing device configured to :
determine a lowest service version among a plurality of different service versions;
generate a parent operator based on the lowest service version;
for each subsequent service version of the plurality of service versions:
determine an incremental capability of the subsequent service version; and
generate a corresponding child operator based on the incremental capability, wherein the corresponding child operator includes logic and code paths corresponding to the incremental capability, resulting in a set of child operators;
receive a request identifying a particular subsequent service version;
identify from the set of child operators, by a processing device, a first child operator corresponding to the particular subsequent service version; and
integrate, by the parent operator, the first child operator into the parent operator to respond to the request.

9. The system of claim 8, wherein the processing device is further configured to:
as each child operator of the set of child operators is generated, register the child operator with the parent operator to maintain a mapping of each subsequent service version to its corresponding child operator; and
for each child operator of the set of child operators, maintain an associated flag indicating whether the parent operator is to integrate the child operator.

10. The system of claim 9, wherein the processing device is further configured to:
in response to the first child operator being identified, modify the flag associated with the first child operator to indicate that the first child operator is to be integrated into the parent operator, wherein to integrate the first child operator into the parent operator, the processing device is to:
modify logic and code paths of the parent operator with logic and code paths of the first child operator without recompiling the parent operator.

11. The system of claim 8, wherein to determine the incremental capability of a particular subsequent service version, the processing device is configured to:
determine the incremental capability based on a difference between a functionality of the particular subsequent service version and a functionality of the lowest service version.

12. The system of claim 8, wherein to determine the incremental capability of a particular subsequent service version, the processing device is configured to:
determine the incremental capability based on a difference between a functionality of the particular subsequent higher version and a functionality of a previous subsequent higher service version.

13. The system of claim 12, wherein each child operator includes a pointer to one or more other child operators that the child operator depends on.

14. The system of claim 13, wherein to integrate the first child operator into the parent operator, the processing device is to:
determine, using a pointer of the first child operator, one or more other child operators of the set of child operators that the first child operator depends on; and
integrate the logic and code paths of the first child operator and each of the one or more other child operators into the parent operator.

15. A non-transitory computer-readable medium having instructions stored thereon which, when executed by a processing device, cause the processing device to carry out the method of any of claims 1-7.
